# EUROPEAN PATENT APPLICATION

(11) **EP 4 563 413 A1**
(43) Date of publication of application: **04.06.2025**
(21) Application number: 24215166.0
(22) Date of filing: 25.11.2024
(51) Int. Cl.: B60Q 1/50, F21S 43/145

(54) **AUTOMOTIVE LAMP**

(30) Priority: 30.11.2023 IT 202300025578
(71) Applicant: Marelli Automotive Lighting Italy S.p.A., 10078 Venaria Reale (TO) (IT)
(72) Inventor: ALLOI, Stefano, I-33028 Tolmezzo, UDINE (IT); ANTONIPIERI, Michele, I-33028 Tolmezzo, UDINE (IT)
(74) Representative: Chimini, Francesco

(57) **Abstract**

An automotive lamp (1) is provided with at least one device (8) for generating dynamic three-dimensional lighting effects. Such a device comprises two screens (10, 12) with an array of punctiform lighting sources, said screens (10, 12) being juxtaposed with each other along two respective adjacent edges (10', 12'). The screens lie on respective screen planes incident with each other and converging towards the outside of the lamp. The punctiform lighting sources of the screens are controlled by an electronic control unit (18) configured to control the brightness values of said punctiform lighting sources so as to generate a time sequence of luminous images which form, in the eyes of an observer looking at the lamp, a video displaying one or more three-dimensional elements (20, 22, 24) in motion.

## Description

The present invention relates to an automotive lamp provided with a device for generating dynamic three-dimensional lighting effects.

As known, there is an increasingly exasperated search for special lighting effects in the automotive lamp industry, also by virtue of the widespread and continuous advances in LED lighting technology.

For example, automotive lamps which employ LED strips combined with optical guides of a variety of shapes, geometries, and arrangements in a lamp are becoming increasingly popular to achieve special lighting effects which can contribute, for example, to characterizing a brand or model of a car in an increasingly crowded industry.

Precisely because of the presence of increasingly numerous and fierce players, although automakers strive to find more and more innovative solutions, the room for maneuver tends to shrink, even because there are still objective constraints due to compliance with industry regulations, the space available to house the lighting devices, the demand for ever greater reliability, and the need to contain production costs.

It is the object of the present invention to suggest an automotive lamp capable of generating lighting effects which differ significantly from the lighting effects produced by current lamps.

It is another object of the invention to provide an automotive lamp capable of generating special lighting effects but without leading to an increase in the structural complexity, size, and manufacturing cost of the lamp.

It is a further object of the invention to provide an automotive lamp capable of generating lighting effects substantially independent of mechanical and optical constraints, and thus fully customizable, for example also based on the state of the car.

Such objects are achieved by an automotive lamp according to claim 1 and a device for generating three-dimensional dynamic lighting effects according to claim 14.

The dependent claims describe preferred or advantageous embodiments of the lamp and the device.

In any case, the features and advantages of the automotive lamp and of the device for generating three-dimensional dynamic lighting effects according to the invention will be apparent from the following description of preferred embodiments thereof, given by way of nonlimiting indication, with reference to the accompanying drawings, in which:

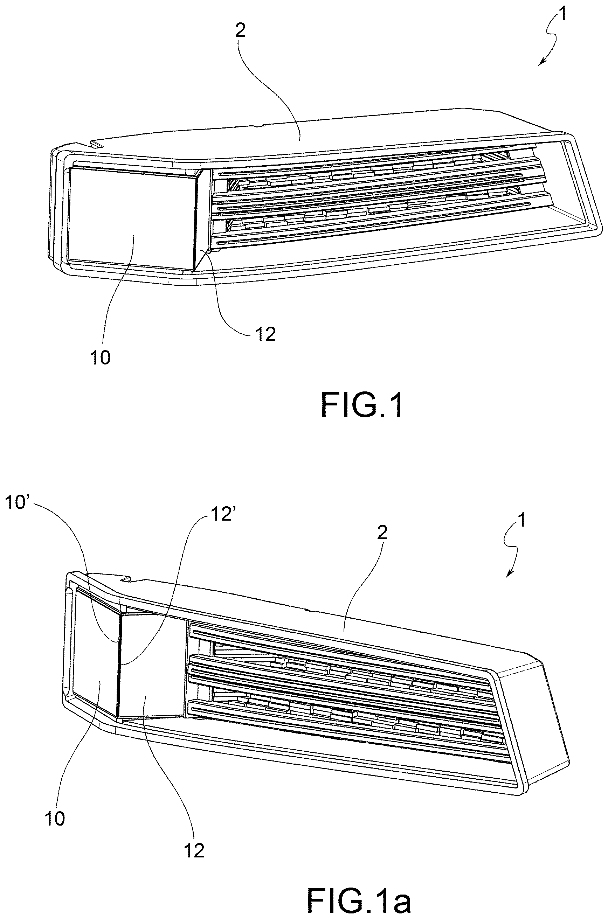

- figures 1 and 1a are two perspective views of an automotive lamp according to the present invention;

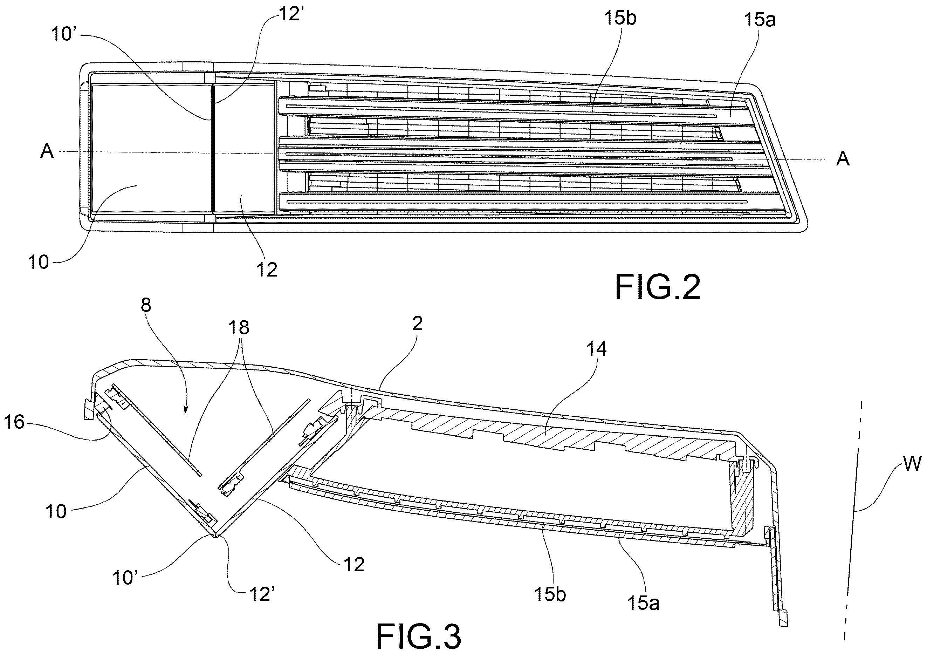

- figure 2 is a front view of the automotive lamp;
- figure 3 is a cross section of the lamp taken along line A-A in figure 2;

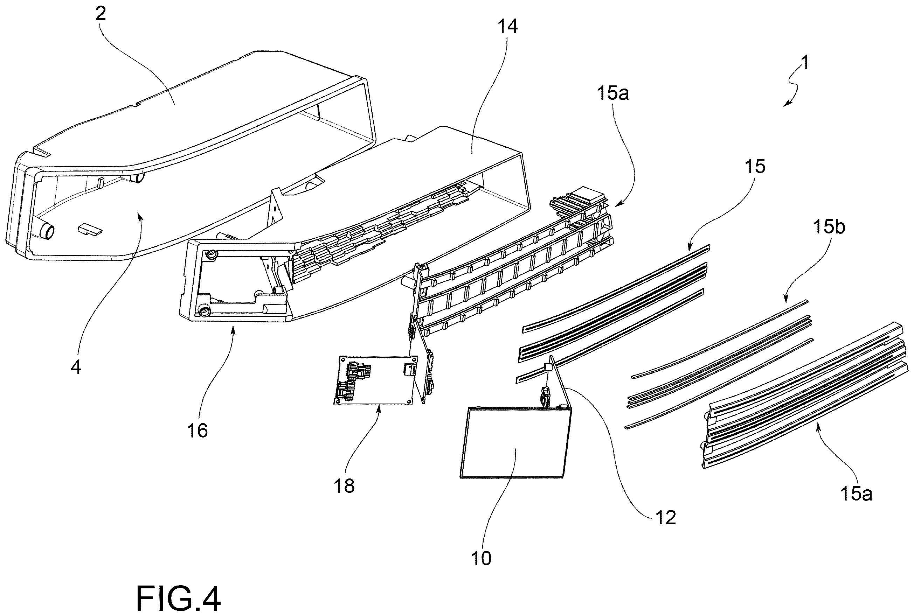

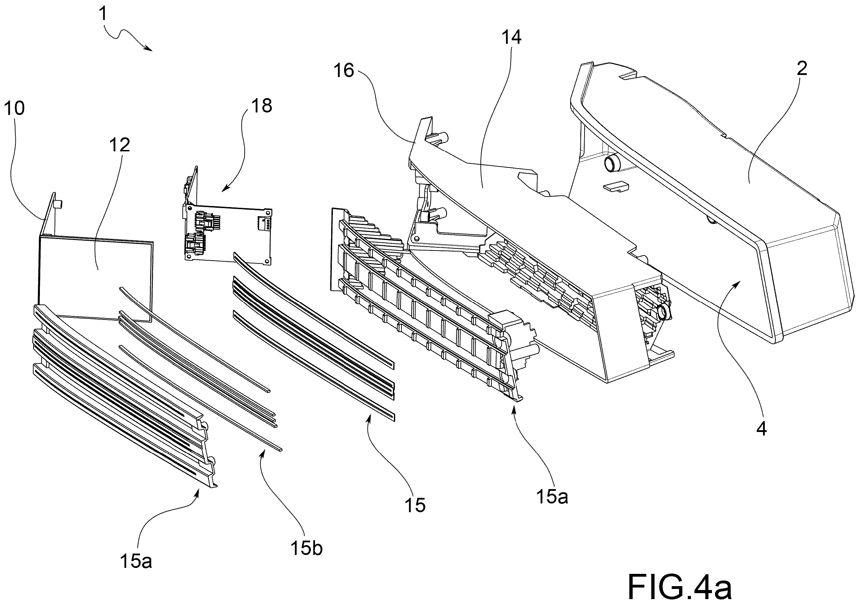

- figures 4 and 4a are two exploded perspective views of the automotive lamp;
- figure 5 is an example of an image of a 3D animation created in a 3D modeling program;
- figure 6 is a further example of an image of a 3D animation projected onto two virtual screens in the 3D modeling program;
- figure 7 shows the image in figure 6 following the alignment of a virtual screen with respect to the other one on the same plane;
- figure 8 shows another example of an image of a 3D animation projected onto the two aligned virtual screens viewed frontally;
- figure 9 shows a software code portion containing a sequence of brightness values of the punctiform lighting sources of the two automotive lamp screens corresponding to the pixels of the image in figure 8; and
- figure 10 shows the two real automotive lamp screens on which the desired three-dimensional lighting effect is formed.

In this disclosure, all directional references (e.g., upper, lower, up, down, left, right, to the left, to the right, top, bottom, above, below, vertical, horizontal, clockwise, and counterclockwise) are used only for identification purposes to help the reader understand the described embodiments and do not create any limitations, in particular regarding the location, orientation, or use of the described embodiments.

In said drawings, reference numeral 1 indicates as a whole an automotive lamp according to the present invention, in particular a rear lamp.

In the following description, the terms "rear/front" and "inner/outer" will be used to describe the components of the lamp 1. The terms "rear" and "inner" will refer to anything facing the car body; conversely, the terms "front" and "outer" will refer to anything facing in the opposite direction, i.e., towards an observer who looks at the lamp.

The automotive lamp 1 comprises a lamp body 2 defining a lamp housing 4. At least one device 8 for generating dynamic three-dimensional lighting effects is at least partially accommodated in the lamp housing 4.

For example, lamp body 2 is made by a box-like element, which is open at the front. For example, the lamp body 2 can house a support structure 14 to which lighting devices are fixed, e.g., LED lighting bars 15, related support elements 15a cooperating with the support structure 14 and possible optical guides 15b.

The device for generating three-dimensional dynamic lighting effects comprises two screens 10, 12 with an array of punctiform lighting sources.

In an embodiment, a portion of the support structure 14, e.g., a side portion, forms a frame 16 to which the two screens 10, 12 are fixed.

For example, the two screens 10, 12 form respective lamp walls which close a portion of the lamp body 2 open outwards.

In an embodiment, the punctiform light sources consist of mini-LEDs. Indeed, mini-LEDs allow generating lighting effects with good definition while allowing the device for generating three-dimensional dynamic lighting effects to be approved for use in an automotive lamp. However, it cannot be excluded that the screens can be made with OLEDs or be of the TFT or LCD type or be based on other technologies.

The two screens 10, 12 are juxtaposed with each other along two respective adjacent edges 10', 12'. The screens 10, 12 lie on respective screen planes incident with each other and converging at the front, i.e., towards the outside of the lamp. In other words, an observer who looks at the automotive lamp 1 sees a convex surface formed by two inclined adjacent planes.

In an embodiment, considering the lamp mounted on the car, the two screens 10, 12 are arranged vertically. In other words, given a car axis W which extends horizontally from the front to the rear of the car, the adjacent edges of the two screens 10', 12' are orthogonal to the car axis W.

Note that in a constructional variant, if technology and production costs allow it, the two screens 10, 12 could consist of two continuous angled portions of a single screen.

Therefore, in the present description and in the appended claims, the expression "two screens" comprises both an embodiment in which two individual, substantially flat screens are used, juxtaposed with each other so as to form a single screen forming an angle, and an embodiment which employs a single screen folded so as to form two mutually angled portions.

The punctiform lighting sources of the screens 10, 12 are controlled by an electronic control unit 18 configured to control the brightness values of the punctiform lighting sources so as to generate a time sequence of luminous images, hereafter also referred to as frames, which form, in the eyes of an observer who looks at the lamp 1, a video displaying one or more three-dimensional elements 20, 22, 24 in motion.

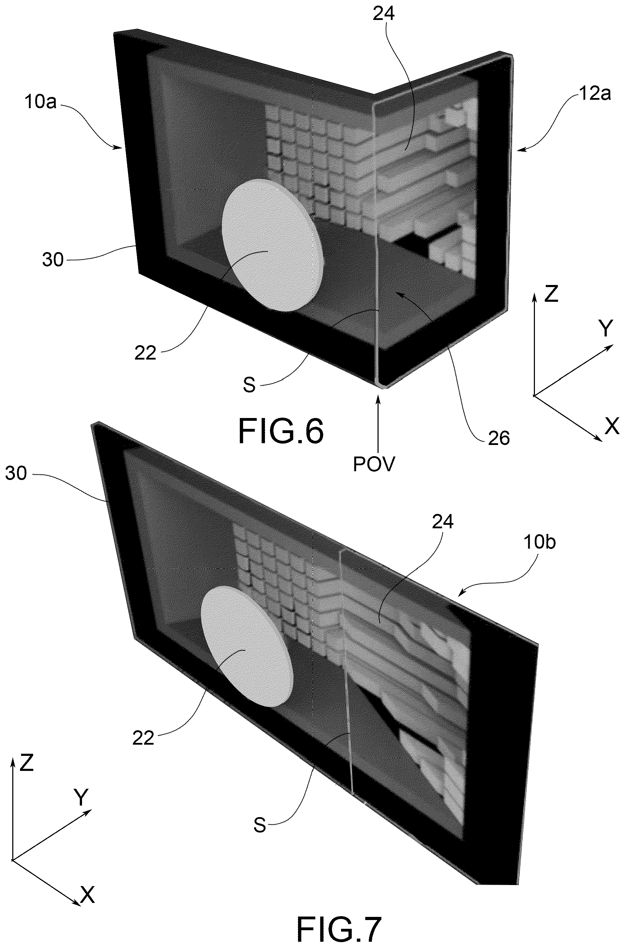

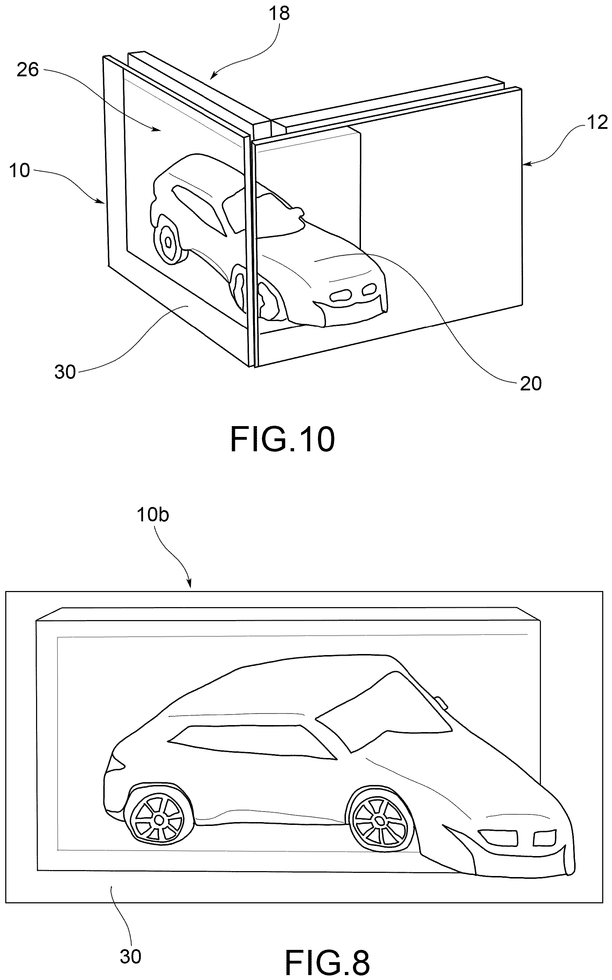

For example, as shown in figure 10, a three-dimensional dynamic lighting effect generated by the light effect generating device 8 consists of an animation of a three-dimensional object, a car 20 in the example in figure 10, geometric objects such as a disc 22 and a plurality of bars 24 in the example in figures 6 and 7, moving in a parallelepiped-shaped virtual chamber 26, two consecutive sides of which consist of the two screens 10, 12.

In an embodiment, the screens 10, 12 form an angle of about 90° therebetween.

However, other angles greater or less than 90° are possible. For example, when the lamp 1 is observed from a different point of view with respect to the direction identified by the car axis W, an angle greater than 90° allows viewing the animation generated by the lamp in a less distorted manner than in the 90° angle configuration.

Moreover, it has been noted that animated virtual objects having square geometric shapes, when viewed from a different point of view with respect to the direction identified by the car axis W, undergo less deformation than objects of spherical shape.

In an embodiment, each screen 10, 12 forms an angle of about 45° with respect to the car axis W. This configuration allows generating a highly realistic three-dimensional dynamic lighting effect when the observer looks at the lamp 1 from a point of view (POV) identified by the car axis W.

In an embodiment, the punctiform lighting sources are monochromatic. For example, in the case of an automotive rear lamp, the punctiform lighting sources are adapted to generate red light.

In other embodiments, for example where there are no particular monochromatic constraints, the punctiform lighting sources can be adapted to generate different colors, e.g., given by the combination of three RGB LEDs or four RGBW LEDs.

In an embodiment, the electronic control unit 18 is placed in the lamp body 2, preferably behind the two screens 10, 12.

In an embodiment, the electronic control unit 18 comprises a driver adapted to control the punctiform lighting sources, storage media on which one or more lighting programs to be displayed on the screens 10, 12 are stored, and a microcontroller which controls the driver based on a selected lighting program.

In an embodiment, the adjacent edges 10', 12' of the two screens 10, 12 are shaped so as to achieve a mutual shape coupling. In other words, the adjacent edges 10', 12' of the two screens 10, 20 are shaped so that their coupling forms a convex surface which is substantially continuous from an observer's point of view. For example, if the two screens 10, 12 form an angle of 90° therebetween, the adjacent edges are beveled so that the side surface of the edge is inclined by 45° with respect to the flat faces of the respective screen.

In addition to making the surface formed by the juxtaposition of the two screens 10, 12 substantially continuous, this technical solution can allow keeping the distance between the punctiform sources of one screen positioned close to the edge adjacent to the other screen (thus the last column of the array of punctiform lighting sources), and the homologous lighting sources of the other screen equal to the distance between the punctiform sources of the same screen. Therefore, a continuity of the lighting effect in the transition between the two screens is also obtained in addition to physical continuity between the two screens.

A possible method of programming the brightness values of the punctiform lighting sources will now be described.

In general, the present invention is based on the concept that, for each image produced by the screens 10, 12, the brightness value of the punctiform lighting sources is determined so that the punctiform lighting sources of at least one of the two screens form a distorted image of the one or more three-dimensional virtual elements, in which the distortion is determined based on a choice of an observer's point of view, so that when the observer observes the two screens from the chosen point of view, the observer sees the three-dimensional virtual elements in an undistorted manner, as shown in figure 10.

In other words, by observing at least one of the two screens 10, 12 frontally, i.e., from a direction perpendicular to the plane on which the screen lies, a distorted image is perceived, deformed with respect to the image of a real three-dimensional object which is intended to be perceived by an observer who observes the two screens 10, 12 from a preset point of view (POV), in particular from a direction substantially parallel to the car axis W and passing through the vertex of the angle formed by the two screens 10, 12, as shown in figure 6. Instead, when an observer looks at the lamp from a position coincident with or close to the preset point of view, he/she sees the desired three-dimensional image, i.e., that realistically reproduces a real three-dimensional object.

In an embodiment, the method of programming the brightness values of the punctiform lighting sources starts with a design, by means of a 3D modeling program, of a starting 3D animation corresponding to the video that the viewer sees displayed on the two screens.

Therefore, the three-dimensional objects in the starting 3D animation realistically represent real objects.

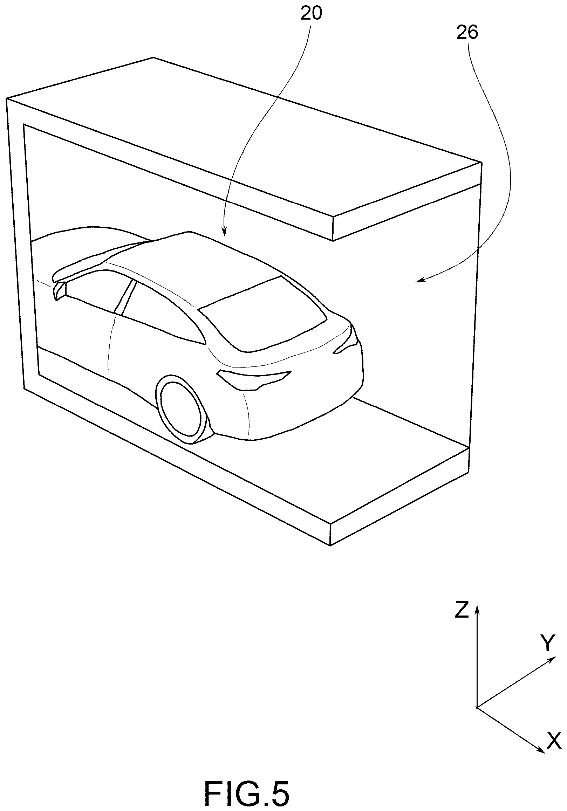

An example of a 3D animation frame is shown in figure 5. As mentioned above, in addition to the three-dimensional element in motion (in this example, a car 20), the walls of the virtual chamber 26 in which the three-dimensional object moves are also modeled.

The starting 3D animation is then associated, in the development environment of the 3D modeling program, with two virtual screens 10a, 12a which simulate the two real lamp screens 10, 12 juxtaposed.

In other words, the starting 3D animation is set, in the 3D modeling program, inside a chamber of which the two real lamp screens 10, 12 juxtaposed represent the two virtual walls 10a, 12a, i.e., the virtual screens defined above, closest to the observer.

In other words, the starting 3D animation comprises not only three-dimensional objects in motion, but also a three-dimensional depiction of the two real screens 10, 12. The two real screens 10, 12 are modeled as being viewed by an observer who observes the lamp from a preset point of view (POV), e.g., along a direction parallel to the car axis W and passing through the vertex of the angle formed by the two screens 10, 12.

In other words, as explained above, the two virtual screens 10a, 12a are arranged as a function of a preset point of view (POV) of the observer, e.g., identified by the direction of the car axis W.

Again in development environment of the 3D modeling program, the starting 3D animation is projected onto each of the two virtual screens 10a, 12a. An example of a starting 3D animation frame projected onto the two virtual screens 10a, 12a is shown in figure 6.

In other words, the 3D modeling program connects the starting 3D animation elements to the respective virtual screens 10a, 12a.

The 3D modeling program then performs a rotation of one of the two virtual screens 10a, 12a (in this case the smaller virtual screen 12a) so that it is coplanar with the other screen. The rotation occurs about a rotation axis (parallel to the Z axis in the drawings) passing through the conjunction line S between the two virtual screens 10a, 12a.

A 2D animation is thus formed, which is at least partially distorted from the starting 3D animation. In particular, as it can be noted from the example in figure 7, the image projected on the virtual screen (12a), which has been rotated from the starting position thereof, is distorted.

This results in a single virtual screen 10b which reproduces on a single plane the images projected on the two starting screens, at least one of which is distorted due to the rotation of the respective screen.

As explained above, the distorted image corresponds to the image that the observer would see if, instead of observing the lamp from the preset point of view (POV), he/she were to observe the lamp from a direction perpendicular to the real screen 12 corresponding to the virtual screen 12a which was subjected to rotation.

Next, in the development environment of the 3D modeling program the position and/or orientation of the two virtual screens 10a, 12a aligned, or of the single virtual screen 10b, is modified so that they are displayed in a front view.

Figure 8 again shows the example of the car in figure 10 depicted on a single virtual screen 10b consisting of the two virtual screens 10a, 12a aligned, and viewed frontally. Note that the front of the car is completely distorted.

At this point, the 2D animation is broken down into a time sequence of frames, i.e., images.

Each frame is thus broken down into a grid of pixels corresponding to the union of the two arrays of punctiform lighting sources. In other words, each pixel in a frame corresponds to a punctiform lighting source.

Finally, for each frame, the light intensity of each pixel is associated with a brightness value of the respective punctiform lighting source. Therefore, the punctiform lighting sources, when powered so as to produce light of an intensity equal to the value determined in the previous step, jointly generate a lighting effect corresponding to one frame of the 2D animation.

Since such a lighting effect is generated on the two angled, real screens 10, 12, the observer who observes the lamp from a point of view coincident with or close to the preset point of view (POV) (and with respect to which the virtual screens have been modeled) perceives an undistorted lamp depiction, i.e., corresponding to real three-dimensional objects viewed in perspective, as in the example in figure 10.

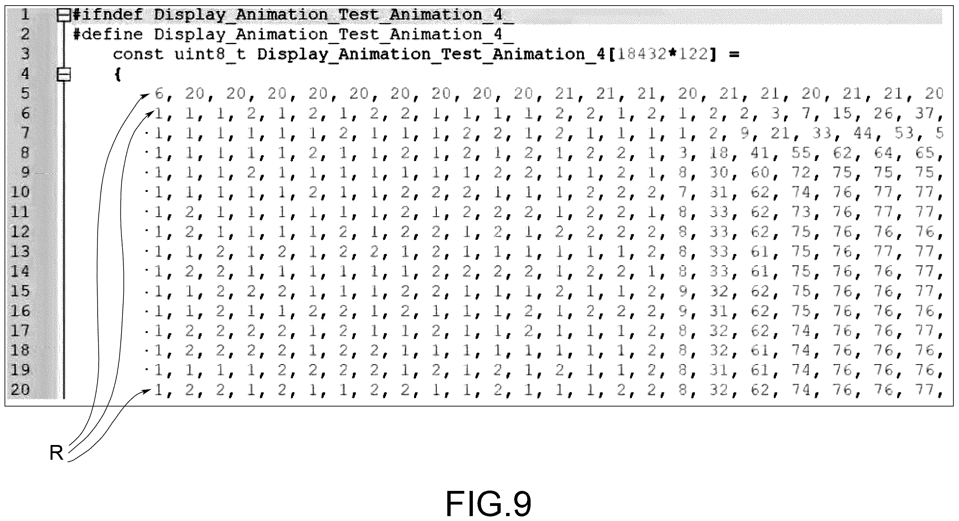

Figure 9 shows a portion of the software code which implements a lighting program to be displayed on the two screens 10, 12 of the automotive lamp 1. For example, such a software code is stored on the storage media accessible from or forming part of the electronic processing unit, in particular of the microcontroller.

In particular, a sequence of rows R of numeric data separated by commas is depicted. The rows R of the code represent the rows of the array formed by the union of the two arrays of punctiform lighting sources. Each numerical data is a light intensity value of a respective punctiform lighting source. For example, the electronic processing unit 18 can operate at 8 bits, so as to drive each punctiform lighting source with 255 levels of light intensity. The numerical data of the R rows of the code in figure 9 thus represent one of 255 levels of light intensity, where level 0 indicates that the source is not powered.

It is apparent that in the case of a lighting source consisting of several lighting devices, such as an RGB LED, a set of numerical data will be reported instead of a single numerical data, e.g., a triad in the case of RGB LEDs.

Note that, especially in the case of monochromatic sources, the use of multiple bits to define the level of light intensity allows increasing the contrast levels between the virtual elements forming the scene and thus making the animation displayed on the screens 10, 12 particularly realistic.

In an embodiment, in order to generate, in a particularly noticeable and realistic manner, an effect of emergence of the dynamic three-dimensional virtual elements 20, 22 from the planes of the screens 10, 12, the brightness values of the punctiform lighting sources are controlled so as to create, at least along the lower and vertical edges of the two screens, a peripheral frame 30 which appears predominantly in contrast to the remaining portion of the screens, in particular to the background of the virtual chamber 26 and to the dynamic three-dimensional elements 20, 22, 24. Such a contrast is interrupted only in some frame sequences to produce an effect of superimposition of the three-dimensional elements 20, 22 in motion on a portion of the peripheral frame 30, so as to simulate an effect of emergence from one or both screens 10, 12.

In an embodiment, such a contrasting peripheral frame 30 is obtained by leaving the punctiform lighting sources off at the peripheral frame.

The device for generating three-dimensional dynamic lighting effects described above thus allows an automotive lamp to generate, in combination with or as an alternative to more traditional lighting effects, realistic three-dimensional light animations clearly perceivable by an observer who looks at the lamp.

Also note that, in particular by virtue of the use of punctiform lighting sources of adequate power and capable of meeting the standards and specifications set for the lights of the automotive lamps, such as mini-LEDs, for example, the array of punctiform sources of one or both of the screens 10, 12 can also be controlled so as to perform lighting and signaling light functions of the lamp, e.g., brake and position lights (or tail lights).

In other words, the screens 10, 12, especially when made with mini-LED technology, allow not only obtaining multiple and different lighting effects, both static and dynamic, but also performing any lighting function expected in a vehicle, such as a position signaling or brake (tail) function, or the like, for example.

Therefore, the screens 10, 12 of the lamp according to the invention allows producing both three-dimensional aesthetic lighting effects and typical lighting and/or signaling functions of lamps. This is also by virtue of the fact that screens made with mini-LED technology, or equivalent technology, are capable of emitting light so as to meet photometric standards and specifications related to the typical lighting and/or signaling functions of a lamp.

By virtue of the angled arrangement of the two screens, it is possible to simulate a virtual chamber in which one or more three-dimensional elements move, even using small screens which can be housed in a circumscribed portion of the automotive lamp.

By virtue of the possibility of creating a strong contrast between a peripheral portion of the screens, the background, for example of the virtual chamber, and the dynamic three-dimensional elements, it is also possible to generate realistic effects of emergence of the moving virtual elements from the planes of the screens.

Those skilled in the art may make changes and adaptations to the embodiments of the automotive lamp according to the invention or can replace elements with others which are functionally equivalent in order to meet contingent needs without departing from the scope of the following claims. Each of the features described as belonging to a possible embodiment can be made irrespective of the other embodiments described.

## Claims

1. An automotive lamp (1), comprising a lamp body (2) and, housed at least partially inside said lamp body, at least one device (8) for generating three-dimensional dynamic lighting effects comprising two screens (10, 12) with an array of punctiform lighting sources, said screens (10, 12) being juxtaposed with each other along two respective adjacent edges (10', 12'), the screens lying on respective screen planes incident with each other and converging towards the outside of the lamp so as to form a convex surface with respect to a point of view outside the lamp, wherein the punctiform lighting sources of the screens are controlled by an electronic control unit (18) configured to control the brightness values of said punctiform lighting sources so as to generate a time sequence of luminous images which form, in the eyes of an observer looking at the lamp, a video displaying one or more three-dimensional elements (20, 22, 24) in motion.

2. An automotive lamp according to claim 1, wherein the screens (10, 12) form an angle of about 90° therebetween.

3. An automotive lamp according to claim 1 or 2, wherein each screen (10, 12) forms, with respect to a car axis (W) extending in the front-rear direction of the car, an angle of about 45°.

4. An automotive lamp according to any one of the preceding claims, wherein said punctiform sources are mini-LEDs.

5. An automotive lamp according to any one of the preceding claims, wherein the punctiform lighting sources are monochromatic.

6. An automotive lamp according to any one of the preceding claims, wherein the electronic control unit (18) is placed in the lamp body (2), behind the two screens (10, 12).

7. An automotive lamp according to any one of the preceding claims, wherein the adjacent edges (10', 12') of the two screens are shaped so that the coupling thereof forms a substantially continuous convex surface, from the observer's point of view, the distance between the punctiform sources of one screen (10) close to a respective adjacent edge (10') from the punctiform sources of the other screen (12) close to the respective adjacent edge (12') being equal to the distance between the punctiform sources of the same screen (10, 12).

8. An automotive lamp according to any one of the preceding claims, wherein, for each image, the brightness value of the punctiform lighting sources is determined so that the punctiform lighting sources of one of the two screens (12) form a distorted image of said one or more three-dimensional elements (20, 22, 24), wherein the distortion is determined based on a choice of an observer's point of view, so that when the observer observes the two screens (10, 12) from said chosen point of view, the observer sees said one or more three-dimensional elements (20, 22, 24) in an undistorted manner.

9. An automotive lamp according to any one of the preceding claims, wherein the brightness value of the punctiform lighting sources is determined by a method of programming the brightness values of the punctiform lighting sources comprising the steps of:
- designing, using a 3D modeling program, a starting 3D animation corresponding to the video that the observer sees displayed on the two screens (10, 12) of the lamp;
- associating, in the 3D modeling program, the starting 3D animation with two virtual screens (10a, 12a) simulating the two juxtaposed lamp screens (10, 12), wherein the two virtual screens (10a, 12a) are arranged as a function of a preset observer's point of view;
- projecting, in the 3D modeling program, the starting 3D animation on each of the two virtual screens (10a, 12a);
- rotating, in the 3D modeling program, one of the two virtual screens (12a) so as to make it coplanar with the other virtual screen (10a), so as to form a distorted 2D animation with respect to the starting 3D animation;
- framing from a front view, in the 3D modeling program, the two virtual screens (10a, 12a) aligned;
- breaking down the 2D animation into a time sequence of frames;
- dividing each frame into a grid of pixels corresponding to the union of the two arrays of punctiform lighting sources;
- for each frame, associating the light intensity of each pixel with a brightness value of the respective punctiform lighting source.

10. An automotive lamp according to claim 9, wherein the sequence of brightness values of each punctiform lighting source of a sequence of frames forming a video is stored on storage media included in or accessible by the electronic control unit.

11. An automotive lamp according to any one of the preceding claims, wherein the brightness values of the punctiform lighting sources are controlled so as to create, on the two screens (10, 12), a peripheral frame (30) which appears predominantly in contrast with the remaining illuminated portion of the screens and with respect to the dynamic three-dimensional elements (20, 22, 24), and so as to interrupt said contrast only in some image sequences to produce an effect of superimposition of said one or more three-dimensional elements (20, 22) in motion on a portion of the peripheral frame (30).

12. An automotive lamp according to claim 11, wherein said peripheral frame (30) is obtained by leaving the punctiform lighting sources mainly off at the peripheral frame (30).

13. An automotive lamp according to any one of the preceding claims, wherein the punctiform lighting sources of one or both of the screens (10, 12) are controlled by the electronic control unit (18) so as to carry out lighting or signaling light functions, for example stop or position lights.

14. A device for generating three-dimensional dynamic lighting effects comprising two screens (10, 12) with an array of punctiform lighting sources, said screens being juxtaposed with each other along two respective adjacent edges (10', 12'), the screens lying on respective screen planes incident with each other and converging towards an observer's point of view, wherein the punctiform lighting sources of the screens are controlled by an electronic control unit (18) configured to control the brightness values of said punctiform lighting sources so as to generate a time sequence of luminous images which form, in the eyes of an observer looking at the screens (10, 12), a video displaying one or more three-dimensional elements (20, 22, 24) in motion, wherein, for each image, the brightness value of the punctiform lighting sources is determined so that the punctiform lighting sources of one of the two screens form a distorted image of said one or more three-dimensional elements, wherein the distortion is determined based on a choice of an observer's point of view, so that when the observer observes the two screens from said chosen point of view, the observer sees said one or more elements in an undistorted manner.

15. A device according to claim 14, wherein the brightness value of the punctiform lighting sources is determined by a method of programming the brightness values of the punctiform lighting sources comprising the steps of:
- designing, using a 3D modeling program, a starting 3D animation corresponding to the video that the observer sees displayed on the two screens;
- associating, in the 3D modeling program, the starting 3D animation with two virtual screens (10a, 12a) simulating the two juxtaposed screens (10, 12), wherein the two virtual screens (10a, 12a) are arranged as a function of a preset observer's point of view;
- projecting, in the 3D modeling program, the starting 3D animation on each of the two virtual screens (10a, 12a);
- rotating, in the 3D modeling program, one of the two screens (12a) so as to make it coplanar with the other screen (10a), so as to form a distorted 2D animation with respect to the starting 3D animation;
- framing with a front view, in the 3D modeling program, the two virtual screens (10a, 12a) aligned;
- breaking down the 2D animation into a time sequence of frames;
- dividing each frame into a set of pixels corresponding to the union of the two arrays of punctiform lighting sources;
- for each frame, associating the light intensity of each pixel with a brightness value of the respective punctiform lighting source.

16. A device according to claim 14 or 15, wherein the adjacent edges (10', 12') of the two screens (10, 12) are shaped so as to achieve a mutual shape coupling adapted to form a substantially continuous convex surface, from an observer's point of view, the distance between the punctiform sources of one screen (10) close to a respective adjacent edge (10') from the punctiform sources of the other screen (12) close to the respective adjacent edge (12') being equal to the distance between the punctiform sources of the same screen.

17. A device according to any one of claims 14-16, wherein the brightness values of the punctiform lighting sources are controlled so as to create, on the two screens (10, 12), a peripheral frame (30) which appears predominantly in contrast with the remaining illuminated portion of the screens (10, 12) and with respect to the dynamic three-dimensional elements (20, 22, 24), and so as to interrupt said contrast only in some image sequences to produce an effect of superimposition of said one or more three-dimensional elements (20, 22) in motion on a portion of the peripheral frame (30).
